Europäisches Patentamt

European Patent Office

Office européen des brevets

(19)

(11) Veröffentlichungsnummer: **0 087 069**

**A1**

# (12) EUROPÄISCHE PATENTANMELDUNG

(21) Anmeldenummer: 83101248.9

(22) Anmeldetag: 10.02.83

(51) Int. Cl.³: **B 29 F 1/06**

(30) Priorität: 11.02.82 DE 3204756

(43) Veröffentlichungstag der Anmeldung:
31.08.83 Patentblatt 83/35

(84) Benannte Vertragsstaaten:
AT CH FR GB IT LI NL

(71) Anmelder: Klöckner-Ferromatik Desma GmbH
Postfach
D-7831 Malterdingen(DE)

(72) Erfinder: Wippenbeck, Peter, Prof. Dipl.-Ing.
Saarstrasse 56
D-7080 Aalen(DE)

(74) Vertreter: Gross, Reinhold, Dr.
Klöckner-Werke AG Patentabteilung Klöcknerstrasse 29
D-4100 Duisburg 1(DE)

(54) Verfahren zum Füllen eines Formwerkzeugs mit plastifizierbarem Material mittels eines Einspritzkolbens oder einer als Einspritzkolben Wirkenden Schubschnecke sowie Vorrichtung zur Durchführung des Verfahrens.

(57) Dem Verfahren liegt die Aufgabe zugrunde, die bei dem Füllen eines Formwerkzeugs (18, 19) auftretenden Nachteile und Schwierigkeiten zu vermeiden. Es soll ein Verfahren verschafft werden, das eine Druckführung in der Weise gestattet, daß die die Verdichtung begleitende Abkühlung ganz oder teilweise unter konstant bleibendem spezifischen Volumen der Formmasse erfolgt, der Beginn eines derartigen Abschnittes einstellbar ist und auch ein Massepolster bestehen bleibt.

Die Lösung der Aufgabe besteht darin, daß innerhalb der druckgeführten Füllphase nach einer anfänglichen Steigerung des Massedruckes in der Werkzeughöhlung (17) unmittelbar oder verzögert von einer treibenden Druckdifferenz zwischen Einspritzkolben bzw. Schubschnecke (11) und der Werkzeughöhlung (17) umgeschaltet wird auf ein Druckgleichgewicht zwischen Einspritzzylinder (10) und Werkzeughöhlung (17) und/oder daß der Einspritzkolben bzw. die Schubschnecke (11) in der zum Umschaltzeitpunkt erreichten Position gegen Masserückdruck gehalten wird.

./...

EP 0 087 069 A1

*Fig. 1*

<u>Verfahren zum Füllen eines Formwerkzeugs mit</u>
<u>plastifizierbarem Material mittels eines Einspritz-</u>
<u>kolbens oder einer als Einspritzkolben wirkenden</u>
<u>Schubschnecke sowie Vorrichtung zur Durchführung</u>
<u>des Verfahrens.</u>

Die Erfindung betrifft ein Verfahren zum Füllen eines
Formwerkzeugs mit plastifizierbarem Material, zum
Beispiel mit thermoplastischen Kunststoffen, mittels
eines Einspritzkolbens oder einer als Einspritzkolben
wirkenden Schubschnecke, sowie eine Vorrichtung zur
Durchführung des Verfahrens. Bei bekannten Verfahren
zum Füllen eines Formwerkzeugs z.B. mit thermoplastischen Kunststoffen, im folgenden gemäß der am
häufigsten verbreiteten Ausführungsart als Spritzgießverfahren bezeichnet, wird der Füllvorgang im
wesentlichen in der Art gesteuert, daß auf eine anfängliche geschwindigkeitsgeführte Phase eine druckgeführte Phase folgt, die bis zum Ende des Füllvorgangs
andauert. Gegen Ende der geschwindigkeitsgeführten
Phase oder im Anfangsbereich der druckgeführten Phase
wird die Füllsituation erreicht, bei der die Werkzeughöhlung vollständig mit plastifizierbarer Masse
benetzt ist, wobei der Massedruck im Inneren der
Werkzeughöhlung noch vergleichsweise gering ist. Daran
schließt sich aufgrund der Weiterführung der Bewegung
des Einspritzkolbens bzw. der Schubschnecke eine Erhöhung des Werkzeuginnendruckes an, verbunden mit
einer Verringerung des spezifischen Volumens bzw. mit
einer Erhöhung der Dichte der in der Werkzeughöhlung
befindlichen Formmasse. Das Ausmaß der so erreichbaren Verdichtung hängt sowohl von der herrschenden
Temperatur als von der Höhe des einwirkenden Druckes und den charakteristischen Eigenschaften der Formmasse ab und wird aus Diagrammen oder Datensammlungen ersichtlich, die den Zusammenhang Druck-Volumen-Temperatur beschreiben. Die Verdichtung der eingespritzten Formmasse wird erreicht durch eine treibende Druckdifferenz zwischen dem Einspritzzylinder und der Werkzeughöhlung, diese Druckdifferenz erzeugt wiederum einen Massestrom in Richtung der Werkzeughöhlung. Der Höhe des Werkzeuginnendruckes und damit auch dem Maß der Verdichtung sind insofern Grenzen gesetzt, als die zuhaltenden Kräfte der werkzeugschließenden Maschinenelemente nicht durch die auftreibenden Kräfte des Werkzeuginnendruckes überschritten werden dürfen, da sonst das Werkzeug öffnen und Formmasse ausfließen lassen würde. Der die Verdichtung bewirkende Massestrom wird deshalb nicht einmalig und plötzlich sondern über eine mehr oder weniger ausgedehnte Zeitspanne eingebracht, wobei die natürliche Tendenz der Formmasse zu einer Druckabsenkung und Verdichtung aufgrund von Abkühlungskontraktion genutzt wird, um bei vergleichsweise niedrigen Werkzeuginnendrücken den erforderlichen Massestrom zustandezubringen. Dabei ist jedoch zu berücksichtigen, daß Masseströme aufgrund von Orientierungs- und Entmischungserscheinungen zu um so gravierenderen Qualitätsmängeln der hergestellten Formteile führen je geringer die Temperatur der strömenden Masse ist. Es ist also anzustreben, daß zumindest gegen Ende des Füllvorgangs, wo die Masseabkühlung bereits weit fortgeschritten ist, möglichst keine Masseströme mehr fließen.

Es ist weiterhin zu beachten, daß die eingespritzte Formmasse entsprechend ihrem Verdichtungsgrad einen Masserückdruck ausübt, der zu einem fließenden Massestrom führt, sobald die Druckbeaufschlagung des Einspritzkolbens bzw. der Schubschnecke auf einen geringeren Wert gebracht wird als es dem Druckgleichgewicht zwischen Einspritzzylinder und Werkzeughöhlung entspricht. Auch solche Masseströme sind zu vermeiden, da sie neben dem Verdichtungsverlust auch Orientierungen und Inhomogenitäten in der Formmasse hervorbringen.

Sobald der Verbindungskanal zwischen Einspritzzylinder und Werkzeughöhlung, im folgenden Angußkanal genannt, nicht mehr massedurchlässig ist, beispielsweise aufgrund des Erstarrens oder Aushärtens der darin befindlichen Spritzmasse, wird der Massestrom in der einen wie in der anderen Richtung unterbunden. Im folgenden wird der Eintritt dieser Situation als "Versiegelungs-Zeitpunkt" bezeichnet. Der vom Einspritzkolben auf die zu verdichtende Formmasse ausgeübte Druck muß demnach in ausreichender Höhe mindestens bis zum Versiegelungs-Zeitpunkt aufrecht erhalten werden, damit verhindert wird, daß Formmasse aus der Werkzeughöhlung ausfließt. Der Versiegelungszeitpunkt selbst ist einer Reihe von Einflußgrößen unterworfen, die dessen Reproduzierbarkeit verschlechtern. So ist der Versiegelungszeitpunkt abhängig von der Temperatur des Formwerkzeugs, von der Temperatur der Formmasse, von der durch Scherfließen in der Formmasse entwickelten Wärme und von den materialspezifischen Eigenschaften der Formmasse. Diese genannten Einflüsse haben ungewollte Schwankungen und wirken sich daher über den Versiegelungszeitpunkt und den dadurch veränderlichen Verdichtungsgrad auf die Maße und Gewichte der hergestellten Formteile aus.

Die Höhe des Verdichtungsgrades der Formmasse in der Werkzeughöhlung steht im Zusammenhang mit der Schwindung der Formmasse: eine höhere oder geringere Verdichtung erbringt eine höhere oder geringere Reduzierung der Schwindung. Hinsichtlich Oberflächengüte und Maßhaltigkeit befriedigende Formteile werden nur erzielt, wenn eine wesentliche Reduzierung der Schwindung herbeigeführt werden kann. Dies ist in zwei grundsätzlichen Richtungen möglich: Entweder man bringt eine hohe Anfangsverdichtung auf, die durch einen rasch eintretenden Versiegelungszeitpunkt gehalten wird oder man bringt eine geringe Anfangsverdichtung auf und führt den zur gewünschten Verdichtung notwendigen Massestrom über eine längere Zeitdauer bis zum spät eintretenden Versiegelungszeitpunkt fort. Eine solche Veränderung des Versiegelungs-Zeitpunkts ist in der Regel nur durch eine Veränderung der Abmessungen des Angußkanals möglich.

Das Ziel einer zweckmäßigen Druckführung beim Werkzeugfüllvorgang ist es deshalb, einerseits eine ausreichende Verdichtung bei möglichst niedrigen Verdichtungsdrücken zu ermöglichen, andererseits aber auch die Masseströme bei fortgeschrittener Abkühlung der Formmasse möglichst gering zu halten, um Molekülorientierungen zu vermeiden. In besonderer Weise wird diese Forderung erfüllt, wenn keinerlei Masseströme mehr fließen. Im Druck-Volumen-Temperatur-Zusammenhang würde dies einer Zustandsänderung bei gleichbleibendem spezifischen Volumen entsprechen, im folgenden als "isochore Zustandsänderung" bezeichnet.

Ein weiteres Ziel ist es, die Reproduzierbarkeit des Verdichtungsvorgangs zu erhöhen, insbesondere im Hinblick auf die vergleichsweise schlechte Beherrschbarkeit des Versiegelungszeitpunkts.

Die Reproduzierbarkeit des Verdichtungsvorganges leidet im allgemeinen auch darunter, daß der Einspritzkolben bzw. die Schubschnecke beim werkzeugfüllenden Vorlauf schwankende Masse-Rückströmverluste aufweist. Auch der durch den Plastifizierhub des Einspritzkolbens bzw. der Schubschnecke bestimmte Ausgangspunkt des werkzeugfüllenden Vorlaufs ist elementbedingten Schwankungen unterworfen. Solche Schwankungen machen es unumgänglich, daß das Ende des werkzeugfüllenden Vorlaufs des Einspritzkolbens bzw. der Schubschnecke nicht als fester Anschlag vorgegeben werden kann, sondern als überlaufbare Hubstrecke vor Erreichen der vordersten, durch Anschlag begrenzten Endstellung, im folgenden als "Massepolster" bezeichnet, vorzugeben ist. Die in den Anfangszeiten der Spritzgießtechnik praktizierte Arbeitsweise mit einem Kolbenvorlauf bis zum vorderen Anschlag genügt erfahrungsgemäß nicht den an die Reproduzierbarkeit gestellten Anforderungen.

Es sind Spritzgießmaschinen bekannt, bei denen die Druckführung des Einspritzkolbens bzw. der Schubschnecke während der Füllphase zeitprogrammierbar ist, also mit einer Anzahl einstellbarer Druckstufen und zugeordneten einstellbaren Zeitabschnitten ausgestattet ist. Eine solche Einrichtung erfordert einen erheblichen Zeitaufwand und hochqualifiziertes Personal zur Ermittlung des optimalen Druckführungsprofils. Es sind Vorschläge bekannt, das optimale Druckführungsprofil durch einen Rechner aus den Daten des materialspezifischen Druck-Volumen-Temperatur-Zusammenhangs ermitteln zu lassen, wobei die isochore Zustandsänderung angestrebt wird. Die Realisierung eines solchen Verfahrens stößt auf erhebliche Schwierigkeiten deshalb, weil in der Regel keine ausreichend genauen materialspezifischen Daten zur Verfügung stehen, weil in der Rechnung auch die zeitlich veränderlichen Druckverluste zwischen Einspritzzylinder und Werkzeughöhlung zu berücksichtigen sind und weil der jeweilige Temperatur-Zeit-Verlauf der sich abkühlenden Formmasse mit in Rechnung zu ziehen ist. Die daraus sich ergebenden Rechen-Unsicherheiten führen dazu, daß letztlich doch eine zeitlich aufwendige empirische Ermittlung vorgenommen wird.

Es ist ebenfalls bekannt, daß Vorschläge gemacht wurden, den Massekanal zwischen Einspritzzylinder und Werkzeughöhlung durch ventilartige Einbauten nach dem Füllvorgang zu verschließen, um einen Masserückfluß zu verhindern. Solche Einrichtungen ergeben eine Störung des Massekanals durch die notwendigen Masseumlenkungen und Massestaustellen, sowie durch die im Massestom beweglichen Verschlußelemente. Hieraus resultieren Nachteile bei thermisch empfindlichen Formmassen und hinsichtlich des erhöhten Reinigungsaufwandes bei Farbwechseln.

Der Erfindung liegt die Aufgabe zugrunde, die bei den bekannten Verfahren zum Füllen eines Formwerkzeugs auftretenden Nachteile und Schwierigkeiten zu vermeiden und ein Verfahren zu schaffen, das mit einfacheren Mitteln eine Druckführung in der Weise gestattet, daß die die Verdichtung begleitende Abkühlung ganz oder teilweise unter konstant bleibendem spezifischen Volumen der Formmasse erfolgt, der Beginn eines derartigen Abschnittes einstellbar ist und auch ein Massepolster bestehen bleibt. Es ist weiterhin bezweckt, daß die Einwirkdauer des vom Einspritzkolben ausgehenden Druckes auf die Formmasse unabhängig vom Versiegelungs-Zeitpunkt beendet und damit besser reproduzierbar wird. Die Erfindung befaßt sich ferner mit einer Vorrichtung zur Durchführung des Verfahrens.

Erfindungsgemäß werden diese Aufgaben dadurch gelöst, daß innerhalb der druckgeführten Füllphase nach einer anfänglichen Steigerung des Massedruckes in der Werkzeughöhlung unmittelbar oder verzögert von einer treibenden Druckdifferenz zwischen Einspritzkolben bzw. Schubschnecke und der Werkzeughöhlung umgeschaltet wird auf ein Druckgleichgewicht zwischen Einspritzzylinder und Werkzeughöhlung und daß der Einspritzkolben bzw. die Schubschnecke in der zum Umschaltzeitpunkt erreichten Position gegen den Masserückdruck gehalten wird. Nach einem bevorzugten Ausführungsbeispiel ist vorgesehen, daß die Position des Einspritzkolbens bzw. der Schubschnecke durch Wegmeßelemente gefühlt wird und nach dem Umschalten von Kolbenvorlauf auf Position-Halten die Druckführung am Einspritzkolben selbststätig so geregelt wird, daß keine weitere Kolbenbewegung mehr erfolgt.

Auf diese Weise ist es mit relativ geringem Aufwand möglich, der anfänglichen Masseverdichtung einen Abkühlverlauf folgen zu lassen, bei dem das spezifische Volumen konstant bleibt. Weiterhin wird gewährleistet, daß ab dem Zeitpunkt der Umschaltung auf Kolbenstillstand keine weiteren Masseströme stattfinden, sei es in Richtung der Werkzeughöhlung oder aus der Werkzeughöhlung heraus. Inhomogenitäten und Orientierungen im Formteil werden dadurch reduziert. Es wird weiterhin vermieden, daß die Druckeinwirkungsdauer vom Versiegelungszeitpunkt abhängig ist und damit erheblichen Schwankungen unterworfen wäre. Das Einhalten des Druckgleichgewichts zwischen Schubschnecke und Werkzeughohlraum bzw. das Halten der Position der Schubschnecke kommt nämlich der Wirkung nach einer Versiegelung des Angußkanals gleich. Überdies wird der Gefahr des Überladens von Formteilen durch zu hohe und zu lange Druckeinwirkung wirksam dadurch begegnet, daß an die Stelle eines einzigen "Nachdruckwertes", der bei Standard-Maschinensteuerungen auf einem konstanten Wert während der Nachdruckzeit gehalten wird oder an die Stelle einer schwierig zu realisierenden und schwierig zu ermittelnden Nachdruck-Abstufung erfindungsgemäß eine "natürliche" Druckabsenkung durch Abkühlung bei "eingesperrtem" Massevolumen tritt. Der steuerungstechnische Aufwand und der Aufwand zur Ermittlung optimaler Druckführung ist für das erfindungsgemäße Verfahren wesentlich geringer. Es ist weiterhin hervorzuheben, daß das erfindungsgemäße Verfahren die an sich bekannte Arbeitsweise der Einstellung und Wirkung eines "Massepolsters" nicht unterbindet. Der Einspritzkolben bzw. die Schubschnecke muß nämlich Ungleichmäßigkeiten des Massestroms durch einen größeren oder geringeren Überlauf über die Umschaltposition (Umschalten von geschwindigkeitsgeführter zur druckgeführter Phase) ausgleichen.

Die Erfindung betrifft auch eine Vorrichtung zur Durchführung des Verfahrens, wobei die Vorrichtung durch Mittel gekennzeichnet ist, das Druckgleichgewicht zwischen Werkzeughöhlung und Einspritzzylinder herbeizuführen, zu halten und/oder die Position des Einspritzkolbens bzw. der Schubschnecke gegen den Masserückdruck zu halten, es handelt sich also um Mittel, den Massestrom sowohl in der Zuflußrichtung als auch in der Abflußrichtung in bezug auf die Werkzeughöhlung vollständig zu stoppen und um dieses Abstoppen einstellbar an einer beliebigen Position des Einspritzkolbens bzw. der Schubschnecke, vorzugsweise kurz vor dem Erreichen der vordersten, durch Anschlag begrenzten Endstellung, auszuführen. In einem bevorzugten Ausführungsbeispiel wird dies durch Wegfühlelemente in Zusammenhang mit einem Druckregelkreis erreicht, der den Druck zur Beaufschlagung des Einspritzkolbens so regelt, daß die Kolbenposition gehalten wird. Im Druckregelkreis erfolgt also eine selbsttätige Anpassung an den augenblicklichen, sich zeitlich verändernden Masserückdruck aus der Werkzeughöhlung und zwar unabhängig von den sich zeitlich ebenfalls verändernden Druckverlusten zwischen Werkzeughöhlung und Vorraum vor der Schneckenspitze bzw. vor dem Einspritzkolben. In einem weiteren Ausführungsbeispiel wird das Halten der Kolbenposition gegen den Masserückdruck durch mechanisch wirkende Haltebacken erreicht, die eine Klemmwirkung auf eine mit dem Einspritzkolben bzw. der Schubschnecke verbundene Kolbenstange ausüben. Es ist weiterhin denkbar, daß das Halten der Position des Einspritzkolbens bzw. der Schubschnecke durch Absperren der für die Kolbenbewegung erforderlichen Hydraulikströme erreicht wird, beispielsweise durch Absperren der aus dem Hydraulik-Zylinderraum vor dem Betätigungskolben führenden Abflußleitung. Durch eine solche Ausführung ergibt sich eine besondere Vereinfachung der Steuerung und Bedienung der werkzeugfüllenden Maschine.

Weitere Vorteile und Merkmale der Erfindung ergeben sich aus der nachfolgenden Beschreibung im Zusammenhang mit der anliegenden Zeichnung, die ein Ausführungsbeispiel der Erfindung darstellt.

Darin zeigen:

Fig. 1  - eine schematische Darstellung des Einspritzaggregates einer Spritzgießmaschine
          mit einer Schubschnecke und mit einer zu-
          gehörigen Druckregeleinrichtung, teil-
          weise in Blockform dargestellt.

Fig. 2  - eine Abwandlung von Fig. 1 mit einer zuhörigen beispielhaften Vorrichtung unter
          Anwendung mechanischer Mittel zum Halten
          der Position des Einspritzkolbens.

Fig. 3  - den Druckverlauf in der Werkzeughöhlung
          bei unterschiedlicher Arbeitsweise der
          werkzeugfüllenden Maschine.

Fig. 4  - das Druck-Volumen-Temeratur-Diagramm eines
          thermoplastischen Kunststoffs mit Zustands-
          verlaufs-Kurven bei unterschiedlicher Ar-
          beitsweise der werkzeugfüllenden Maschine.

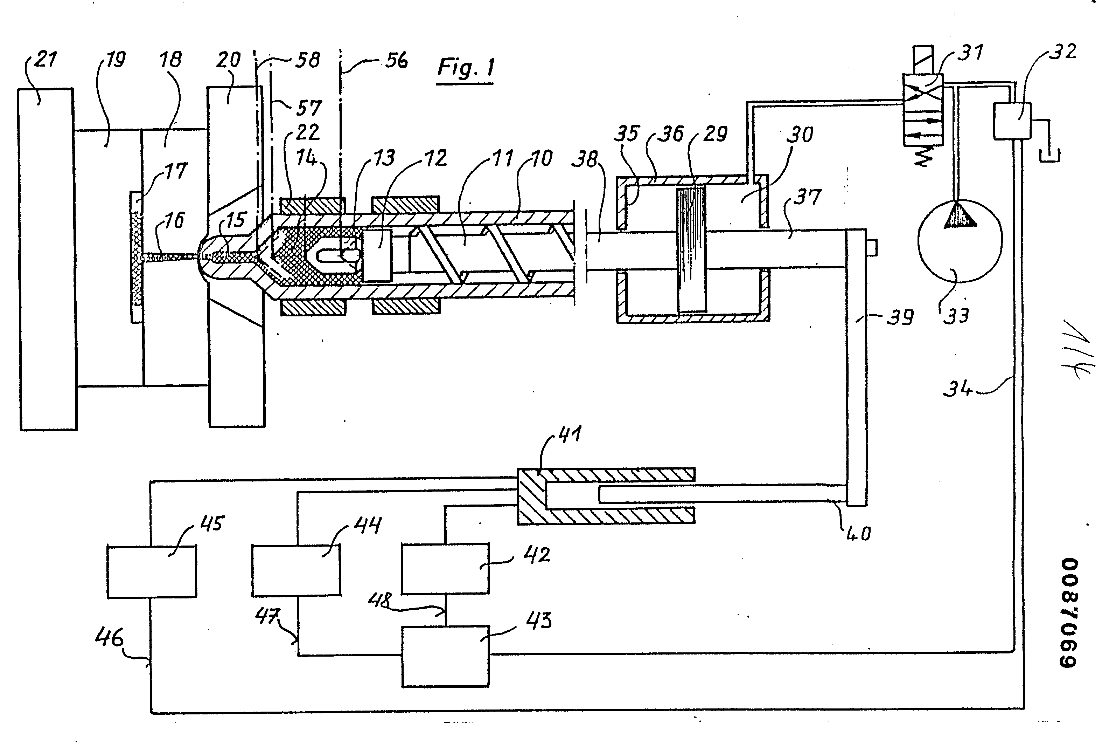

In Fig. 1 ist ein Schneckenzylinder 10 einer Spritzgießmaschine dargestellt, in dem eine Schubschnecke 11
axial beweglich ist. Beim Einspritz- und Verdichtungsvorgang wird die Schubschnecke 11 durch Druckbeaufschlagung des Hydraulik-Zylinderraums 30, wirkend auf
den Hydraulikkolben 29, in Richtung des Formwerkzeugs
18, 19 geschoben, so daß die im Stauraum 14 vor der
Schneckenspitze 13 angesammelte plastifizierte Masse
durch den Düsenkanal 15 und den Angußkanal 16 in den
Werkzeughohlraum 17 unter Druckeinwirkung einströmt.
Die Formwerkzeughälften 18, 19 werden durch Platten 20
und 21 der Zuhaltevorrichtung der werkzeugfüllenden
Maschine zusammengehalten. Der Schneckenzylinder 10
wird durch Heizbänder beheizt, von denen das vordere
mit der Bezugsziffer 22 versehen ist. Aufgrund der abdichtenden Wirkung des zwischen der Schneckenspitze 13 und der Schnecke 11 frei beweglichen Sperrings 12 wirkt die Schnecke 11 als Einspritzkolben. Mit dem Hydraulikkolben 29 steht die Schnecke 11 in nicht näher dargestellter Weise über eine Kolbenstange 38 in Verbindung. Die Druckbeaufschlagung des Zylinderraums 30 findet statt, wenn der Steuerschieber 31 in der gezeichneten Offenstellung steht, wobei eine Verbindung zwischen einer Hydraulikpumpe 33 und dem Zylinderraum 30 hergestellt ist. Ein Druckventil 32 bewirkt dabei eine Druckbegrenzung für die Druckbeaufschlagung des Zylinderraumes 30. Die Höhe der Druckbegrenzung wird dem Druckventil 32 über die Leitung 46 vom Regler 45 aufgeprägt, z.B. auf die Weise, daß das Druckventil in bekannter Weise Umwandlungselemente enthält, durch die in der Leitung 46 oder 34 ankommende elektrische Impulse, z.B. eine bestimmte Spannung, in einen Druckbegrenzungswert umgewandelt werden. Auch der Regler 43 prägt dem Druckventil 32 derartige Impulse auf, wobei entweder der Regler 45 oder der Regler 43 in noch zu beschreibender Weise in Wirksamkeit ist. Zweckmäßigerweise kann auch vorgesehen sein, eine nicht näher dargestellte Rückmeldung des erreichten Druckes vom Zylinderraum 30 zum Regler 45 und/oder 43 vorzunehmen.

Aus dem Zylinder 36 ragt eine Kolbenstange 37 heraus, die über eine Traverse 39 eine Meßstange 40 betätigt. Bei dem dargestellten Ausführungsbeispiel erreicht die Schnecke 11 ihre vordere Endstellung, wenn der Kolben 29 an der Innenwand 35 des Zylinders 36 zur Anlage kommt. Die Meßstange 40 ist parallel zum Kolbenschaft 38 angeordnet, so daß der Kolben 29 die gleiche Bewegung wie die Schnecke 11 und die Meßstange 40 ausführt. Während des Plastifizierens des Spritzmaterials wird die Schnecke 11 durch einen nicht dargestellten

0087069

Rotationsantrieb in Rotation versetzt, wodurch Spritzmasse in den Stauraum 14 gefördert wird und gleichzeitig die Schnecke 11 bis zur Dosierposition 56 zurückgeschoben wird. Dieser als "Dosieren" bezeichnete Vorgang wird beim ausgeführten Beispiel dann beendet, wenn der Meßwertaufnehmer 41 einem nicht dargestellten Meßwertkomparator einen Hub-Meßwert in der Höhe meldet, die einem vorgegebenen Soll-Meßwert entspricht.

Im Verlauf des Einspritzhubes wird beim dargestellten Ausführungsbeispiel in bekannter Weise von geschwindigkeitsgeführter Hubbewegung der Schnecke 11 in druckgeführte Hubbewegung dadurch umgeschaltet, daß bei einem vorgebbaren Hub-Meßwert des Meßwertaufnehmers 41 der Regler 45 in Wirksamkeit gesetzt wird und dem Druckventil 32 über die Leitung 46 einen Druck-Vorgabewert aufprägt. Im weiteren Verlauf der Werkzeugfüllung, beispielsweise wenn die Schneckenspitze vor der Positionslinie 57 angekommen ist, wird im Meßwert-Komparator 44, dem ein entsprechender Hub-Meßwert vorgebbar ist, ein Steuerimpuls erzeugt, der über die Leitung 47 den Regler 43 in Wirksamkeit bringt und gleichzeitig den Regler 45 außer Wirksamkeit setzt. Der Regler 43 steht über die Leitung 48 mit dem Meßwertumformer 42 in Verbindung, der die ankommenden Meßsignale des Meßwertaufnehmers 41 so umformt und dem Regler 43 weitergibt, daß Abweichungen der Position der Meßstange 40 von der Umschalt-Position zur Auslösung druckerhöhender oder drucksenkender Signale im Druckventil 32 führen, und zwar in der Art, daß Positionsabweichungen in Richtung Formwerkzeug drucksenkende und Positionsabweichungen in Richtung Schneckenrücklauf druckerhöhende Wirkung haben. Auf diese Weise wird beim Werkzeugfüllvorgang erreicht, daß die Schnecke 11 zu einem vorgebbaren Zeit- oder Positionspunkt axial stillsteht. Die Vorgabe des Beginns der Wirksamkeit des Reglers 43 und damit die Stillstandsphase der Schnecke 11 kann auch durch die Schaltzeit einer nicht dargestellten Zeituhr erfolgen, die beispielsweise mit Beginn der druckgeführten Phase des Einspritzens anläuft. Eine weitere Möglichkeit des Umschaltens auf Schneckenstillstand ist gegeben, wenn durch einen nicht dargestellten Meßfühler im Formwerkzeug 18, 19 eine vom Druck der komprimierten Spritzmasse abhängige Meßgröße, z.B. die auftreibende Kraft der Spritzmasse, aufgenommen, einem Meßwertkomparator zugeführt und bei Erreichen eines Vorgabewertes als umschaltendes Signal verwendet wird. Außerdem sind Kombinationen dieser Umschaltweisen möglich. Vorzugsweise wird bei dem erfindungsgemäßen Verfahren die Umschaltung auf Positions-Stillstand der Schnecke 11 durch die beschriebene zeitgesteuerten oder abhängig vom Werkzeuginnendruck gesteuerten Mittel erfolgen. Gesetzt den Fall, daß die Umschaltung auf Positions-Stillstand der Schnecke 11 bei Positionslinie 57 erfolgte, so verbleibt zur vordersten Endstellung der Schnecke, Position 58, noch ein Abstand, der im dargestellten Beispiel auch einen Bereich angibt, innerhalb dem die Umschaltposition 57 schwanken kann. Auf dem Weg der Schnecke 11 von Position 56 nach Position 57 können sich nämlich ungleichmäßige Masserückströmverluste über den Sperring 12 ergeben, die durch eine größere oder kleinere Vorlaufstrecke der Schnecke 11 in bekannter Weise ausgeglichen werden. Der verbleibende Abstand zur vordersten Endstellung 58 der Schnecke 11 wird als "Massepolster" bezeichnet, das Massepolster bei Umschaltung von der geschwindigkeitsgeführten Phase in die druckgeführte Phase als "Anfangsmassepolster", im dargestellten Beispiel einer Position zwischen den Positionslinien 56 und 57 entsprechend. Der Abstand der Positionslinien 57 und 58 ist als "Restmassepolster" zu bezeichnen.

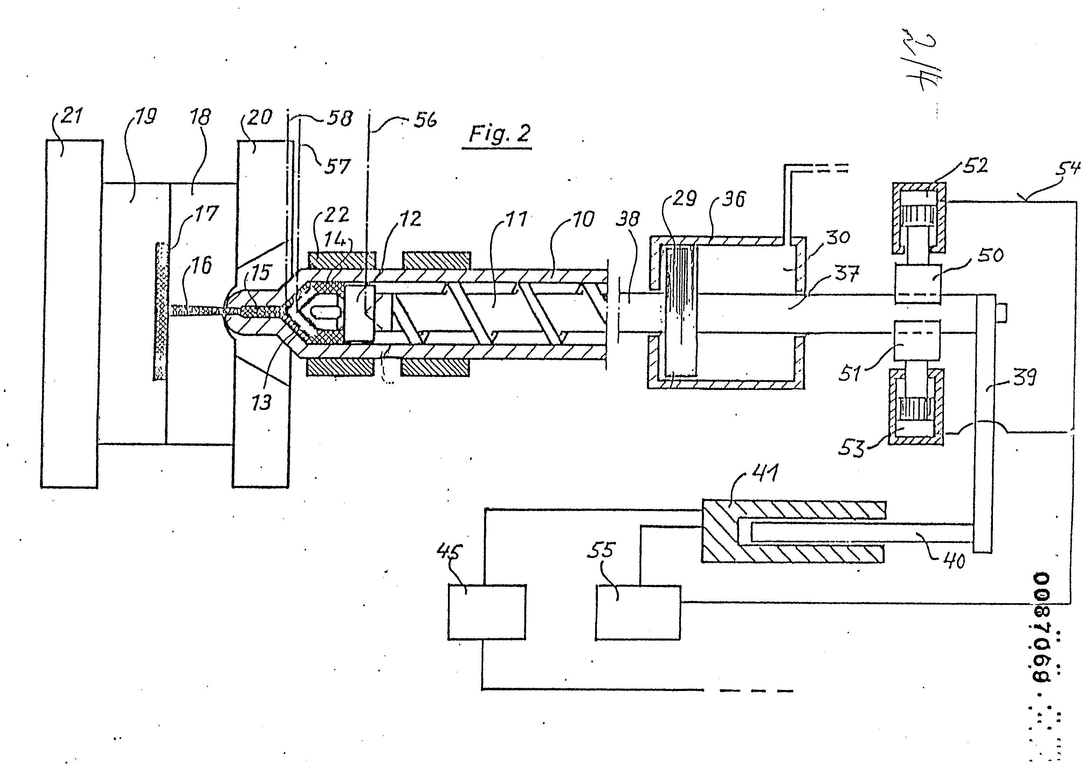

Der zeitliche Ablauf des Einspritzvorgangs nach dem erfindungsgemäßen Ausführungsbeispiel findet demnach in folgender Weise statt:
Ausgangsposition 45 - geschwindigkeitsgeführte Bewegung der Schnecke 11 bis zu einer Position vor der Linie 57, dort in bekannter Weise weg-, zeit- oder werkzeuginnendruckabhängige Umschaltung auf druckgeführte Phase - Einwirkung konstanten oder zeitvariablen Druckes über eine vorgegebene Zeitdauer, hierbei erfolgt z.B. eine weitere Schneckenvorbewegung bis zur Position 57 - nach Ablauf der vorgegebenen Zeitdauer oder nach Erreichen eines vorgegebenen, innendruckabhängigen Meßwerts erfolgt erfindungsgemäß das Umschalten auf Positionsstillstand der Schnecke 11 - Halten der Position der Schnecke 11 über eine vorgegebene Zeitdauer. In Fig. 2 ist die Schnecke 11 in der Halteposition 57 gezeichnet.

Fig. 2 zeigt ein Ausführungsbeispiel zur Durchführung des erfindungsgemäßen Verfahrens und zugleich ein Ausführungsbeispiel der erfindungsgemäßen Vorrichtung, bei der das Halten der Position 57 der Schnecke 11 durch Klemmbacken 50, 51 erfolgt, die, betätigt durch die Hydraulikkolben der Zylinder 52 und 53, an der Kolbenstange 37 angreifen, sobald ein Zeitschaltelement 55 einen vorgegebenen Zeitwert erreicht hat. In der übrigen Zeit sind die Klemmbacken 50 und 51 in nicht dargestellter Weise zurückgezogen und geben damit die Kolbenstange 37 frei. Die Initiierung der Zeitschaltuhr 55 erfolgt durch ein Signal, das bei Erreichen eines vorgegebenen Meßwertes des Wegaufnehmers 41, verursacht durch das Einfahren der Meßstange 40, abgegeben wird. Die Erfindung schließt ein, daß der Impuls zur Betätigung der Klemmbacken 50 und 51 auch durch Signale erfolgen kann, die werkzeuginnendruckabhängig oder abhängig vom Weg der Schnecke 11 gewonnen werden.

Das erfindungsgemäße Halten der Position der Schnecke 11 kann auch durch andere, nicht dargestellte Mittel erreicht werden, beispielsweise durch Absperren der hydraulischen Abflußleitung, die aus dem Zylinderraum 30 hinter dem Einspritzkolben 29 herausführt. Hierzu müßte beispielsweise der Steuerschieber 31 zum Umschaltzeitpunkt auf Absperrstellung geschaltet werden.

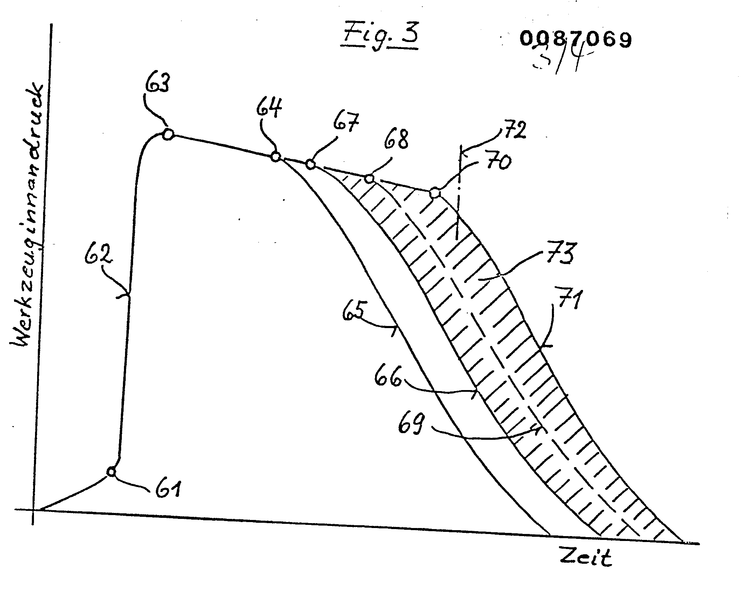

In Fig. 3 ist ein beispielhafter Verlauf des Werkzeuginnendrucks über der Einspritzzeit (Abszisse) dargestellt. Die geschwindigkeitsgeführte Phase des Einspritzvorgangs dauert in diesem Beispiel bis zum Punkt 61 an, bei dem die Werkzeughöhlung vollständig mit plastischer Masse benetzt ist. Der Druckanstieg 62 ist bereits der Masseverdichtung zuzuordnen. Im Punkt 63 ist das Druckmaximum entsprechend der Druckführung erreicht, infolge zunehmender Abkühlung steigen die Druckverluste zwischen Schneckenvorraum und Werkzeughöhlung 17 an, so daß bei konstant gehaltener Druckbeaufschlagung des Zylinderraums 30 eine leichte Druckabsenkung 63 - 64 erfolgt. Um hier eine stärkere Druckabsenkung zu vermeiden, muß zwischen den Punkten 63 und 64 bzw. 67, 68, 70 noch ständig plastifizierte Masse in den Werkzeughohlraum 17 nachgedrückt werden, was mit einer entsprechenden Vorlaufbewegung der Schnecke 11 verbunden ist. Wird nun die Position der Schnecke 11 beispielsweise ab Punkt 64 gehalten, so erfolgt eine durch die Masseabkühlung bedingte Druckabsenkung 65. Diese gleicht den Druckabsenkungskurven 66, 69, 71, die nach einer Versiegelung des Angußkanals 16 zu den Zeitpunkten 67, 68, 70 auftreten. Der Versiegelungszeitpunkt ist jedoch stark abhängig von Massetemperatur und Werkzeugtemperatur und kann somit beispielsweise zwischen den Zeitpunkten 67 und 70 schwanken. Daraus resultieren unterschiedliche Verdichtungsgrade und unterschiedliche Massenachdrückmengen. Die Druckabsenkungskurven streuen dann im Bereich des Feldes 73. Durch eine genaue Einhaltung der Lage der Druckabsenkungskurve führt das erfindungsgemäße Verfahren somit zu einer Verbesserung der Fertigungsgenauigkeit beim Spritzgießen. Der Zeitpunkt 72 bezeichnet die bei Spritzgießmaschinen bekannter Bauart einzustellende Druckeinwirkungszeit, die notwendig ist, um bei schwankenden Versiegelungs-Zeitpunkten Masserückströme zu vermeiden. Der Zeitabstand des Punktes 70 zur Linie 72 ist ein dementsprechender Sicherheits-Zeitabstand.

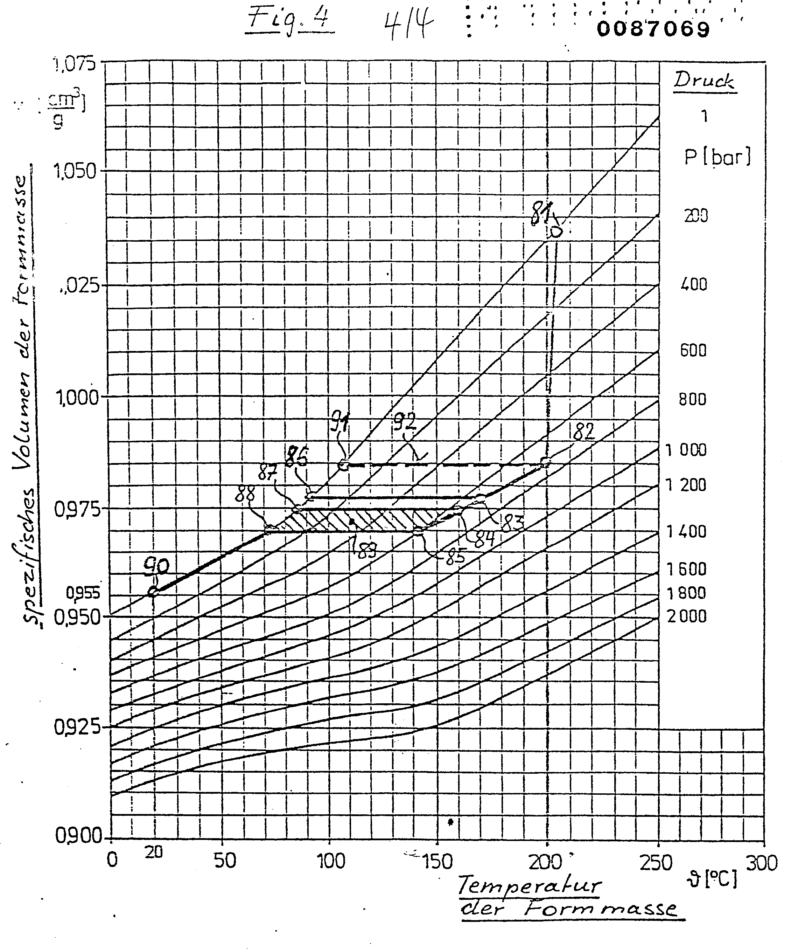

In Fig. 4 sind die Druckverlaufslinien der Fig. 3 unter Einbeziehung der Temperatur der eingespritzten Masse in ein Druck-Volumen-Temperatur-Diagramm eines beispielhaften thermoplastischen Kunststoffs übertragen. Dabei ist auf der Ordinate das spezifische Volumen der Formmasse, auf der Abszisse die Temperatur der Formmasse und in Form einer Parameterdarstellung der Druck der Formmasse aufgetragen. Der Kurvenzug 61 bis Punkt 63 in Fig. 3 entspricht dabei der Linie 81-82. Die Druckeinwirkung unter Massenachlieferung bis Punkt 64 in Fig. 3 entspricht die der Strecke 82-83 in Fig. 4. Ein Halten der Schneckenposition ergibt einen Kurvenzug mit konstantem spezifischen Volumen, also die Isochore 83-86 oder, bei einer beispielhaften frühzeitigeren Umschaltung auf Positions-Stillstand der Schnecke 11 die gestrichelte Isochore 92 zwischen den Punkten 82 und 91. Die durch Versiegelung des Angußkanals 16 hervorgerufenen Isochoren ab den Punkten 84, 85 bedecken aufgrund unvermeidbarer Schwankungen das Streufeld 89. Da jedoch die Schwindung der hergestellten Formteile direkt abhängig ist von dem jeweiligen Abstand in Ordinatenrichtung der Punkte 86 bzw. 87, 88 vom Ordinatenwert des Punktes 90, der das Ende der Abkühlung angibt, ergeben sich bei schwankendem Versiegelungs-Zeitpunkt unterschiedliche Schwindungen und damit eine schlechte Maßhaltigkeit, dagegen erfindungsgemäß eine verbesserte Maßhaltigkeit. Jede Abweichung der jeweiligen Abkühllinie im Bereich rechts von der Druck-Parameterlinie 1 bar vom isochoren Verlauf ist mit Masseströmen verbunden. Aus Fig. 4 wird also auch deutlich, daß die Erfindung es gestattet, frühzeitig zu einer massestromfreien Abkühlung zu kommen, und zwar auch bei spät versiegelnden, dickeren Angußquerschnitten. Allgemein gesehen bringt die Erfindung somit eine größere Einstellbreite unabhängig vom Angußquerschnitt mit sich, sie erlaubt es, die qualitätsgünstige massestromfreie Abkühlung häufiger zu nutzen und sie verbessert die Reproduzierbarkeit der Spritzgießfertigung.

Patentansprüche:

1. Verfahren zum Füllen eines Formwerkzeugs mit plastifizierbarem Material mittels eines Einspritzkolbens oder einer als Einspritzkolben wirkenden Schubschnecke, wobei in bekannter Weise gegen Ende des Füllvorgangs von einer geschwindigkeitsgeführten Füllphase auf eine druckgeführte Füllphase übergegangen wird und wobei die Umschaltung von der geschwindigkeitsgeführten Füllphase auf die druckgeführte Füllhphase abhängig vom Vorlaufweg des Einspritzkolbens bzw. der Schubschnecke oder zeitgesteuert oder abhängig vom Massedruck in der Werkzeughöhlung erfolgt, wobei weiterhin das für den jeweiligen Werkzeugfüllvorgang bereitgehaltene Volumen an plastifizierbarem Material in ebenfalls bekannter Weise durch den Dosierhub des Einspritzkolbens bzw. der Schubschnecke einstellbar ist,
dadurch gekennzeichnet,
daß innerhalb der druckgeführten Füllphase nach einer anfänglichen Steigerung des Massedruckes in der Werkzeughöhlung unmittelbar oder verzögert von einer treibenden Druckdifferenz zwischen Einspritzkolben bzw. Schubschnecke und der Werkzeughöhlung umgeschaltet wird auf ein Druckgleichgewicht zwischen Einspritzzylinder und Werkzeughöhlung und/oder daß der Einspritzkolben bzw. die Schubschnecke in der zum Umschaltzeitpunkt erreichten Position gegen den Masserückdruck gehalten wird.

2. Verfahren nach Anspruch 1,
dadurch gekennzeichnet,
daß das Umschalten auf Druckgleichgewicht bzw. auf Halten der Position des Einspritzkolbens bzw. der Schubschnecke durch Zeit-, Kolbenhub- oder Werkzeuginnendruckvorgabe einstellbar ist.

3. Vorrichtung zur Durchführung des Verfahrens nach einem der vorangegangenen Ansprüche, wobei in bekannter Weise die Position des Einspritzkolbens bzw. der Schubschnecke durch Wegmeßelemente gefühlt wird, dadurch gekennzeichnet, daß die vom Hub des Einspritzkolbens bzw. der Schubschnecke herrührenden Wegmeßimpulse in einem Druckregelkreis die Druckbeaufschlagung des Einspritzkolbens bzw. der Schubschnecke in der Weise steuern, daß dem Umschalten gemäß dem Verfahren nach Anspruch 1 und 2 das Halten der Position des Einspritzkolbens bzw. der Schubschnecke folgt.

4. Vorrichtung zur Durchführung des Verfahrens nach Anspruch 1 und 2, dadurch gekennzeichnet, daß das Halten der Position des Einspritzkolbens bzw. der Schubschnecke durch Klemmelemente erreicht wird.

5. Vorrichtung zur Durchführung des Verfahrens gemäß Anspruch 1 und 2, dadurch gekennzeichnet, daß das Umschalten von einer treibenden Druckdifferenz zwischen dem Einspritzzylinder und der Werkzeughöhlung auf ein Druckgleichgewicht durch das Betätigen eines Hilfskolbens erfolgt, der in seiner Wirkung an die Stelle des Hauptkolbens tritt.

6. Vorrichtung nach Anspruch 5, dadurch gekennzeichnet, daß die Position des Hilfskolbens durch Wegmeßelemente gefühlt wird und daß die davon herrührenden Wegmeßimpulse in einem Druckregelkreis die Druckbeaufschlagung des Hilfskolbens in der Weise steuern, daß ein Halten der Position des Hilfskolbens gegen den Masserückdruck erfolgt.

7. Vorrichtung nach Anspruch 5,
   dadurch gekennzeichnet,
   daß das Halten der Position des Hilfskolbens
   durch Klemmelemente erreicht wird.

8. Vorrichtung nach Anspruch 5,
   dadurch gekennzeichnet,
   daß der Hilfskolben als ein den Massestrom
   verschließendes Element ausgebildet ist.

9. Vorrichtung nach Anspruch 5, 6 und 7,
   dadurch gekennzeichnet,
   daß der Hilfskolben in einer Abzweigung des
   Massekanals angeordnet ist und der Massekanal
   durch ein Wegeventil vom Einspritzkolben bzw.
   der Schubschnecke trennbar und mit dem Hilfskolben verbindbar ist.

10. Vorrichtung zur Durchführung des Verfahrens
    nach Anspruch 1 und 2,
    dadurch gekennzeichnet,
    daß das Halten der Position des Einspritzkolbens
    bzw. der Schubschnecke durch Mittel erfolgt, welche einen die Rücklaufbewegung des Einspritzkolbens bzw. der Schubschnecke zwangsläufig begleitenden Strom eines hydraulischen Mediums ab-
    sperren.

Fig. 1

Fig. 2

Fig. 3    0087069

Werkzeuginnandruck

Zeit

63 64 67 68 72 70 73 71 62 65 66 69 61

Fig. 4    4/4    0087069

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 066 725 (J.E. BOETTNER) <br> * Gesamtes Dokument * | 1-3,10 | B 29 F 1/06 |
| X | DE-A-2 544 895 (KRAUSS-MAFFEI AG) <br> * Gesamtes Dokument * | 1-3 | |
| Y | FR-A-2 249 764 (IMPROVED MACHINERY INC.) <br> * Ansprüche 1-21 ; Figur 1 * | 1-3 | |
| Y | DE-B-1 217 595 (DESMA-WERKE GMBH) <br> * Ansprüche 1-6 ; Spalte 4, Zeilen 42-56 ; Figur * | 1-3,10 | |
| Y | DE-A-2 402 798 (CINCINNATI MILACRON INC.) <br> * Ansprüche 1, 2 ; Figur 1 * | 1,2 | RECHERCHIERTE SACHGEBIETE (Int. Cl. ³) <br><br> B 29 F 1/00 |
| Y | DE-A-2 145 010 (L. MAURER) <br> * Ansprüche 1-14 ; Figur 1 * | 1-3 | |
| Y | FR-A-2 462 990 (LE GUEN & HEMIDY) <br> * Figur * | 3,10 | |
| | ---     -/- | | |

Der vorliegende Recherchenbericht wurde für alle Patentansprüche erstellt.

| Recherchenort <br> BERLIN | Abschlußdatum der Recherche <br> 05-05-1983 | Prüfer <br> FINDELI B.F.C |
|---|---|---|

**Europäisches Patentamt**

# EUROPÄISCHER RECHERCHENBERICHT

**0087069**
Nummer der Anmeldung

EP 83 10 1248

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | JAPAN PLASTICS AGE, Band 18, Nr. 174, Juli-August 1980, Tokio K. NISHIZAWA "Progress and application of injecti on process control", Seiten 28-33 * Gesamtes Dokument * | 1-3 | |
| Y | KUNSTSTOFFE, Band 65, Nr. 7, Juli 1975, München B. STILLHARD et al. "Manahmen zur Verbesserung der Formteilqualität beim Spritzgieën", Seiten 406-411 * Seiten 407, 408 * | 1-3 | |
| A | DE-A-2 914 944 (TOSHIBA KIKAI K.K.) | | |
| A | FR-A-2 248 142 (HUNKAR LABORATORIES, INC.) | | RECHERCHIERTE SACHGEBIETE (Int. Cl. ³) |

Der vorliegende Recherchenbericht wurde für alle Patentansprüche erstellt.

| Recherchenort BERLIN | Abschlußdatum der Recherche 05-05-1983 | Prüfer FINDELI B.F.C |
|---|---|---|